(19) Europäisches Patentamt
European Patent Office
Office européen des brevets

(11) **EP 2 123 478 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
**B60B 3/16** *(2006.01)*        **F16D 65/12** *(2006.01)*

(21) Anmeldenummer: **09168992.7**

(22) Anmeldetag: **31.08.2005**

(54) **Kraftfahrzeugrad-Nabe-Verbindung**

Motor vehicle wheel-hub attachment

Liaison entre une roue de véhicule automobile et un moyeu

(84) Benannte Vertragsstaaten:
**DE FR GB**

(43) Veröffentlichungstag der Anmeldung:
**25.11.2009 Patentblatt 2009/48**

(62) Dokumentnummer(n) der früheren Anmeldung(en) nach Art. 76 EPÜ:
**05107956.4 / 1 759 879**

(73) Patentinhaber: **Ford Global Technologies, LLC Dearborn, MI 48126 (US)**

(72) Erfinder: **Schmerwitz, Marko**
**41539, Dormagen (DE)**

(74) Vertreter: **Drömer, Hans-Carsten**
**Henry-Ford Str. 1**
**50725 Köln (DE)**

(56) Entgegenhaltungen:
**JP-A- 9 164 802**

• **PATENT ABSTRACTS OF JAPAN Bd. 2003, Nr. 12, 5. Dezember 2003 (2003-12-05) & JP 2005 096617 A (NTN CORP), 14. April 2005 (2005-04-14)**

**Beschreibung**

Die Erfindung betrifft eine Rad-Nabe-Verbindung nach dem Oberbegriff des Hauptanspruchs, mit einer Nabe, die eine Bremsscheibe und ein Kraftfahrzeugrad trägt, wobei das Kraftfahrzeugrad in seiner Felgenschüssel eine an die Nabe angepaßte Durchbrechung oder Nabenbohrung bzw. -öffnung und einen zur Nabe co-axialen Fortsatz aufweist, und wobei die Nabe einen Zentrierfortsatz aufweist, und wobei der Fortsatz und der Zentrierfortsatz mit ihren jeweils gegenüberliegenden Flächen eine Kontaktfläche ausbilden. Die Erfindung betrifft aber auch ein Verfahren zur Herstellung der Rad-Nabe-Verbindung.

Bekannte Kraftfahrzeugräder weisen eine Felge und eine Felgenschüssel auf, und können einteilig oder zweiteilig ausgebildet sein. Die Befestigung des Kraftfahrzeugrades an der Nabe geschieht mit Radbolzen, die durch in der Felgenschüssel vorgesehene Anschlußaugen in die Nabe eingeschraubt werden. Üblich sind vier oder mehr über den Umfang verteilte Radbolzen, die zudem bei den verschiedenen Fahrzeugtypen auf unterschiedlichen Teilkreisdurchmessern angeordnet sind.

Die Befestigung des Kraftfahrzeugrades an der Nabe kann aber auch mittels an der Nabe befestigter Stehbolzen und Radmuttern erfolgen, wobei letztere auf die dann durch die Löcher der Anschlußaugen ragenden Stehbolzen aufgeschraubt werden.

Die in der Felgenschüssel zentrisch angeordnete Durchbrechung bewirkt die Zentrierung der Felge auf der fahrzeugseitigen Nabe indem die Durchbrechung im Wesentlichen den Abmessungen des zur Zentrierung dienenden Ringsteges bzw. des Zentrierfortsatzes an der Nabe entspricht.

Bei der Montage des Fahrzeugrades wird die Felgenschüssel mit der zentrisch angeordneten Durchbrechung über den Ringsteg bzw. über den Zentrierfortsatz an der Nabe gestülpt, so daß eine Zentrierung der Felgenschüssel bzw. des Kraftfahrzeugrades erreicht wird.

Bei den herkömmlichen Felgen besteht das Problem, daß zumeist die Demontage einer Felgenschüssel besonders schwierig ist. Dies beruht u. A. darauf, daß die Felgenschüssel aufgrund des Auftretens von Korrosion und des Eindringens von Verschmutzungen besonders fest auf dem Ringsteg bzw. des Zentrierfortsatzes der Nabe festsitzt. Meist ist die Felge nur mit Schlägen in Querrichtung des Kraftfahrzeugs zu lösen, was jedoch zu Schäden an der Felge, den Radlagern oder zur Verstellung der Spureinstellung führen kann. Insbesondere fehlt es an geeigneten Hilfsmitteln, wenn das Rad im Falle einer Panne unterwegs von der Nabe zu demontieren ist, um einen Radwechsel vorzunehmen. Da dabei im Allgemeinen ein Hochbocken des Fahrzeugs nur mit dem als Bordwerkzeug mitgelieferten Wagenheber erfolgen kann und das hochgebockte Kraftfahrzeug beim Radwechsel im Allgemeinen nicht weitergehend abgestützt ist, kann das Kraftfahrzeug durch ein Einwirken beispielsweise hoher seitlicher Kräfte vom Wagenheber springen, was unter sicherheitstechnischen Überlegungen besonders bedenklich ist.

Zur Vermeidung von Korrosion im Bereich des Ringstegs bzw. des Zentrierfortsatzes ist es bekannt, diesen mit einem Schutzlack oder einer sonstigen korrosionshemmenden Beschichtung zu versehen, wobei der Zentrierfortsatz beispielsweise auch eingefettet werden kann. Dies weist jedoch den Nachteil auf, daß eine derartige Beschichtung aufgrund der häufigen Radwechselintervalle beispielsweise durch den Sommer-Winterreifenwechsel vergleichsweise schnell abgetragen wird, womit die schützende Wirkung schnell nachläßt. Zudem kann das Lösen der Felgenschüssel bzw. Kraftfahrzeugrades von der Nabe aufgrund der vergleichsweise ungenau einzuhaltenden Dimensionierung des Ringstegs bzw. des Zentrierfortsatzes mit aufgebrachter Lackierung und das Bilden von Riefen in der Lackierung erschwert werden. Darüber hinaus ist eine Aufbringung des Lackes vergleichsweise teuer.

Aus der US 5,938,292 ist bekannt, die als Führungsfläche wirkende Außenseite des Ringsteges bzw. des Zentrierfortsatzes mit recheckig profilierten, nutenförmig umlaufenden Aussparungen zu versehen, um einerseits die Größe der Auflagefläche zwischen der Außenseite und dem im montierten Zustand der Felgenschüssel angrenzenden Kontaktbereich der zentralen Nabenbohrung zu verringern. Die reduzierte Fläche soll das Problem der Korrosion verringern. Zudem soll durch die Aussparungen der Wasserablauf verbessert werden.

Die zuvor beschriebene Ausgestaltung weist jedoch den Nachteil auf, daß das Aufbringen von derartigen Aussparungen, beispielsweise durch Abdrehen, vergleichsweise zeitaufwendig und teuer ist. Zudem besteht das Problem, daß die Bruchgefahr einerseits im Bereich der Aussparungen erhöht ist, und andererseits, um dem entgegenzuwirken, daß die Materialstärke des Ringsteges bzw. des Zentrierfortsatzes im Bereich der als Führungsfläche wirkenden Außenseite erhöht werden muß. Dies hat neben den erhöhten Materialkosten den Nachteil, daß die bewegte und abzufedernde Masse im Bereich des Fahrgestells des Fahrzeugs u. A. im Hinblick auf den Federungskomfort und das fahrdynamische Verhalten nachteilig erhöht wird. Dazu kommt, daß sich die Aussparungen leicht durch Verschmutzungen wie Abriebstaub der Bremsen zusetzen und damit die vorteilhafte Wirkung schnell nachläßt, insbesondere da dieser Befestigungsbereich der Felge meist durch Kappen bedeckt ist und somit nicht der Reinigung zugänglich ist.

Der Erfindung liegt die Aufgabe zugrunde, eine Rad-Nabe-Verbindung der eingangs genannten Art mit einfachen Mitteln dahingehend zu verbessern, daß die genannten Nachteile im Zusammenspiel der Komponenten vermieden werden und somit u. A. eine dahingehend verbesserte Verbindung zwischen den beiden Komponenten untereinander ermöglicht wird, so daß diese Verbindung leichter, d. h. mit weniger Kraftaufwand gelöst werden kann und wobei zudem die einzelnen betroffenen Komponenten unter wirtschaftlichen Gesichtspunkten preiswert herzustellen sind.

Erfindungsgemäß wird die Aufgabe mit einer Rad-Nabe-Verbindung mit den Merkmalen des Anspruchs 1 und mit einem Verfahren zur Herstellung der Rad-Nabe-Verbindung mit den Merkmalen des Anspruchs 9 gelöst.

Dabei ist vorgesehen, dass der Zentrierfortsatz (8) eine minimale Zentrierfortsatzlänge $L_{25}$ in axialer Richtung gemäß

$$L_{25} - T_{25} = D_{16} + T_{16} + L_{33} + T_{33} + L_{19} \,,$$

und eine maximale Zentrierfortsatzlänge $L_{25}$ in axialer Richtung gemäß

$$L_{25} + T_{25} = L_{34} - T_{34} + D_{16} - T_{16} - L_{11}$$

aufweist

Zweckmäßig ist, wenn die Bremsscheibe eine Dickentoleranz von $\pm 0{,}15$mm oder besser aufweist bzw. mit dieser hergestellt ist, und daß der Zentrierfortsatz eine Längentoleranz von $\pm 0{,}3$mm oder besser aufweist bzw. mit dieser hergestellt ist, und daß ein Kontaktabstand eine Toleranz von $\pm 0{,}5$mm oder besser aufweist, so daß die Länge der Kontaktfläche in axialer Richtung einen Toleranzbereich von $\pm 0{,}95$ mm aufweist, wobei der Kontaktabstand in axialer Richtung gesehen der Abstand von einem Anlagebereich der Felgenschüssel an die Bremsscheibe bis zu einem Beginn der Länge der Kontaktfläche zwischen Nabe und Kraftfahrzeugrad ist.

Die Länge der Kontaktfläche wird im Folgenden als Kontaktlänge bezeichnet.

Vorteilhaft wird somit eine Rad-Nabe-Verbindung zur Verfügung gestellt, bei der mit einfachen Mitteln ein Lösen des Kraftfahrzeugsrades von der Nabe auch nach längerer Zeit wesentlich vereinfacht wird, da der Effekt der Korrosionsbildung zwischen dem Zentrierfortsatz und dem Fortsatz zumindest auf ein Minimum reduziert ist. Besonders vorteilhaft ist hierbei, wenn die Kontaktlänge in axialer Richtung gesehen einen annehmbar kleinen Betragsbereich von 0,5 bis 2,4 mm vorzugsweise von 1 bis 2 mm aufweist.

Wie eingangs beschrieben, geschieht die Befestigung des Kraftfahrzeugrades an der Nabe beispielsweise mit Radbolzen, die durch in der Felgenschüssel vorgesehene Anschlußaugen in die Nabe eingeschraubt werden. Dies kann beispielsweise mit vier oder mehr z. B. fünf oder sechs über den Umfang verteilte Radbolzen, die auf fahrzeugspezifisch vorgegebenen Teilkreisdurchmessern angeordnet sind, erfolgen. Die Befestigung des Kraftfahrzeugrades an der Nabe erfolgt in einer alternativen Ausgestaltung mittels an der Nabe befestigter Stehbolzen und Radmuttern, wobei letztere auf die dann durch die Löcher der Anschlußaugen ragenden Stehbolzen aufgeschraubt werden.

Die Nabe weist bevorzugt einen rotationssymmetrischen, zum Fortsatz am Kraftfahrzeugrad co-axial angeordneten Zentrierfortsatz auf. Beispielsweise handelt es sich um einen zylinderförmigen Ringsteg oder eine leicht konisch oder streng zylindrisch geformte massive Aufnahme. Deren radial außen liegende Außenseite ist dabei so gestaltet, daß sie mit der zentrisch angeordneten Durchbrechung bzw. Nabenbohrung in der Felgenschüssel im montierten Zustand wechselwirkt, so daß eine Zentrierung des Kraftfahrzeugrades auf der Nabe bewirkt wird. Beispielsweise werden beim Überstülpen der Nabenbohrung über den Zentrierfortsatz die sich entsprechenden Teilkreisdurchmesser der Gewindelöcher in der Nabe und der Anschlußaugen in der Felgenschüssel zur Deckung gebracht, so daß gegebenenfalls lediglich das Kraftfahrzeugrad auf der Aufnahme verdreht werden muß, um Anschlußaugen und Gewindelöcher für das Durchstecken der Radbolzen und deren Festziehen, also für die abschließende Befestigung zur Deckung zu bringen.

Der Zentrierfortsatz ist bevorzugt stufenförmig mit einer Bremsscheibenstufe und einer in radialer Richtung gesehen dazu tiefer angeordneten Felgenstufe ausgeführt. Die Bremsscheibenstufe dient zur Zentrierung der Bremsscheibe, die zum einen an der Nabe anliegt, und zum anderen mit der Felgenschüssel in Kontakt steht. Die Felgenstufe dient zur Zentrierung der Felge bzw. deren Fortsatz. Weiter weist der Zentrierfortsatz bevorzugt eine Fase auf, die sich von einer Außenseite des Zentrierfortsatzes, bezogen auf eine Mittelachse in radialer Richtung gesehen schräg nach unten zu einem freien Ende des Zentrierfortsatzes erstreckt. Der Zentrierfortsatz weist daher in axialer Richtung gesehen eine Länge auf, die sich von der Anlagefläche der Bremsscheibe an die Nabe bis zu einem freien Ende erstreckt.

Der radseitige Fortsatz kann in einer Ausgestaltung durch einen an der Felgenschüssel vorgesehenen rotationssymmetrischen Flansch gebildet sein, wie dieser beispielsweise an Stahlfelgen angeordnet ist, oder kann in einer weiteren Ausgestaltung durch die Querschnittskontur der Felgenschüssel in diesem Bereich vorgegeben sein, wie es beispielsweise bei Leichtmetallfelgen der Fall ist.

Die Felgenschüssel des Stahlrades weist im Allgemeinen im Längsschnitt gesehen im Übergangsbereich zu ihrem Fortsatz bzw. zu dem Flansch einen gebogenen Verlauf auf, so daß quasi ein kreisabschnittsartiger Felgenabschnitt gebildet ist. Mit seinem Rückenbereich liegt dieser Felgenabschnitt an der Bremsscheibe an, so daß hier der erfindungsgemäße Anlagebereich bzw. Berührpunkt gebildet ist.

Der Beginn der Kontaktlänge (Länge der Kontaktfläche) im Sinne der Erfindung ist der Bereich, in dem der kreisabschnittsartige Felgenabschnitt in den bevorzugt zylinderförmig ausgeführten Fortsatz bzw. Flansch übergeht. Werden nun der Anlagebereich bzw. Berührpunkt und der Beginn der Kontaktlänge in radialer Richtung jeweils mit gedachten Linien gelotet, so ergibt sich zwischen beiden Linien ein axiales (Mittelachse) Abstandmaß, was dem erfindungsgemäßen Kontaktabstand entspricht.

In einer bevorzugten Ausgestaltung der erfindungsgemäßen Rad-Nabe-Verbindung ist der radseitige Fortsatz bezogen auf den Zentrierfortsatz der Nabe derart gestaltet, daß die Nabenbohrung der Felgenschüssel paßgenau an dem Zentrierfortsatz anliegt. Dadurch wird eine besonders gute und effektive Zentrierung des Rades auf der Nabe erreicht

Im montierten Zustand kann ein Mittelpunkt des Fortsatzes zu einem Mittelpunkt des Zentrierfortsatzes einen Versatz aufweisen, so daß der radseitige Fortsatz mit seiner Innenfläche mit einem Außenumfang des Zentrierfortsatzes eine in radialer Richtung gesehene Berührungslinie bildet. Dadurch wird in radial Richtung gesehen ein radialer Spalt zwischen der Innenfläche des Fortsatzes und dem Außenumfang des Zentrierfortsatzes gebildet, der sich von der Berührungslinie bis zu einem der Berührungslinie radial gegenüberliegenden Zenit stetig vergrößert, wobei der radiale Spalt im Zenit vorzugsweise einen Betrag von 0,03 bis 0,13 mm aufweisen kann.

Die Kontaktlänge ist im Sinne der Erfindung die Länge der sich jeweils gegenüberliegenden Flächen des Fortsatzes und des Zentrierfortsatzes und zwar vom Beginn der Kontaktlänge bis zum Startpunkt der Fase an der Außenseite des Zentrierfortsatzes. Der Erfindung liegt die Erkenntnis zugrunde, daß die Kontaktlänge als eine Haupteinflußgröße auf erhöhte Demontagekräfte anzusehen ist. Je größer die Kontaktlänge ist, desto höher ist ein Preßsitzbetrag wegen der Korrosion, so daß höhere Demontagekräfte aufzuwenden sind. Von daher wird erfindungsgemäß eine  annehmbar kleine Kontaktlänge zur Verfügung gestellt, in dem Schlüsselparameter mit Ihren Toleranzen günstig aufeinander abgestimmt bzw. in dem die in Wechselwirkung stehenden Bauteile (Nabe, Bremsscheibe, Felgenschüssel) mit den erfindungsgemäßen Toleranzen hergestellt werden.

Günstig im Sinne der Erfindung ist hierbei auch, wenn der Fortsatz mit seinem freien Ende in axialer Richtung gesehen ein freies Ende des Zentrierfortsatzes etwas überragt, so daß ein Überstand gebildet ist. Zweckmäßiger Weise weist der Überstand einen Betrag von mindestens 0,15 mm auf, der, wenn eine Fase wie oben beschrieben vorgesehen ist, vom Beginn der Fase an dem Zentrierfortsatz bis zum freien Ende des Fortsatzes gemessen wird.

Durch die abdeckende Wirkung des radseitigen Fortsatzes wird vermieden, daß es im Bereich des Zentrierfortsatzes zu Materialanhäufungen durch Korrosionsbildung oder zur Ablagerung von Schmutz, wie z. B. Abriebstaub der Bremsen, kommt, über die beim Abnehmen des Fahrzeugrades von der Nabe ein zu kurzer Fortsatz hinweggeschoben werden müßte, was erhöhte Abnehmkräfte erzeugen würde. Zum Lösen des Rades sind somit vergleichsweise geringe Kräfte erforderlich, wodurch sicher gestellt ist, daß es beim Radwechsel nicht zu Beschädigungen am Fahrzeugrad, der Nabe oder Fahrgestellaufhängung kommt. Zudem ist der mit dem Radwechsel verbundene Zeitaufwand vorteilhaft verringert.

In einer weiteren Ausgestaltung kann der Zentrierfortsatz an seinem freien Ende bzw. seinem freien Endbereich stufenförmig ausgeführt sein, so daß der radiale Spalt im Bereich der Stufe radial vergrößert wird, die Kontaktlänge aber weiter verkleinert wird.

Weitere vorteilhafte Ausgestaltungen der Erfindung sind in den Unteransprüchen und der folgenden Figurenbeschreibungen offenbart. Es zeigen:

Fig. 1    eine Ausführungsform der erfindungsgemäßen Anordnung aus Kraftfahrzeugrad und Nabe in Teilschnittansicht,

Fig. 2    eine Nabe aus Figur 3 als Einzelheit, und

Fig. 3    eine weitere Ausführungsform der Rad-Nabe-Verbindung.

In den Unterschiedlichen Figuren sind gleiche Teile stets mit denselben Bezugszeichen versehen, weswegen diese in der Regel auch nur einmal beschrieben werden.

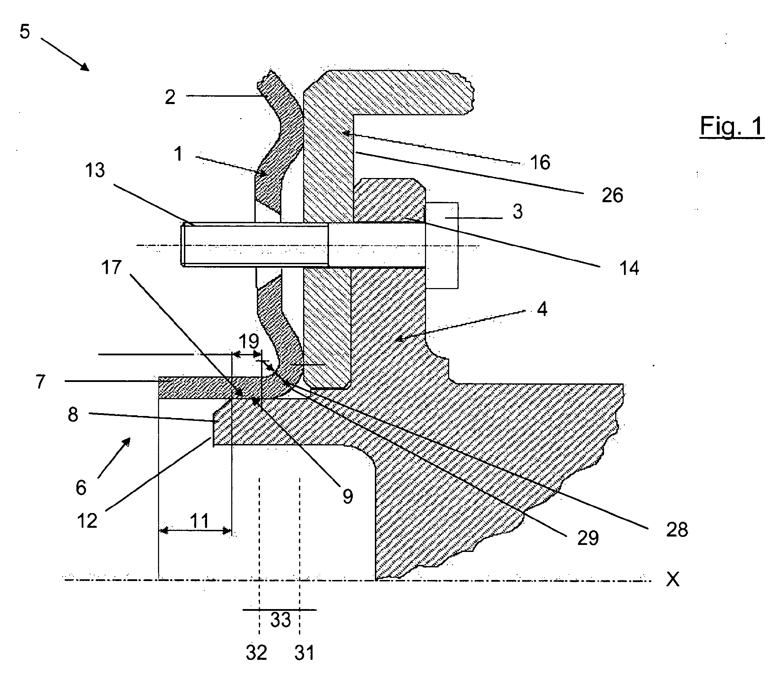

Figur 1 zeigt ein Kraftfahrzeugrad 1, das in dem dargestellten Ausführungsbeispiel als Stahlrad ausgeführt ist. Das Kraftfahrzeugrad 1 ist mit seiner Felgenschüssel 2 mit zumindest einem Verbindungsmittel 3 mit einer Nabe 4 verbunden, so daß eine Rad-Nabe-Verbindung 5 gebildet ist. Die Felgenschüssel 2 weist eine an die Nabe 4 angepaßte zentrische Durchbrechung oder Nabenbohrung 6 bzw. -öffnung und einen rotationssymmetrischen, insbesondere zylinderförmigen Fortsatz 7 auf. Die Nabe 4 weist einen Zentrierfortsatz 8 auf.

Das Kraftfahrzeugrad 1 ist in einer Teilansicht in einem Längsschnitt dargestellt, wobei das Kraftfahrzeugrad 1 zu einer Mittelachse X symmetrisch ausgestaltet ist. Der Zentrierfortsatz 8 kann auch als Zentrierstutzen bezeichnet werden.

Der Zentrierfortsatz 8 bzw. dessen Außenseite 9 weist in axialer Richtung X gesehen einen stufigen Verlauf auf, worauf weiter unten näher eingegangen wird. Der Fortsatz 7 weist im montierten Zustand des Kraftfahrzeugrades 1 bzw. der Felgenschüssel 2 an die Nabe 4 einen Überstand 11 auf, der ein freies Ende 12 der Nabe 4 bzw. des Zentrierfortsatzes 8 überragt.

Bei dem dargestellten Ausführungsbeispiel nach Figur 1 ist das Verbindungsmittel 3 als Stehbolzen ausgestaltet. Der Stehbolzen ist von einer Innenseite der Nabe 4 kommend mit seinem Gewindeabschnitt 13 durch entsprechende Öffnungen 14 in der Nabe 4 geführt, so daß der Gewindeabschnitt 13 die Felgenschüssel 2 überragt. Auf den Gewindeabschnitt 13 kann eine Mutter aufgeschraubt werden, so daß das Kraftfahrzeugrad 1 hinreichend sicher an der Nabe 4 befestigt ist. Zwischen der Nabe 4 und der Felgenschüssel 2 ist eine Bremsscheibe 16 angeordnet. Selbstverständlich sind zur hinreichenden Befestigung des Kraftfahrzeugrades 1 an der Nabe 4 mehrere Verbindungsmittel 3 beispielsweise vier oder mehr, z. B. fünf oder sechs vorgesehen.

Der Fortsatz 7 liegt mit seiner Innenfläche 17 auf dem Zentrierfortsatz 8 bzw. auf dessen Außenseite 9 an, so daß eine Länge 19 einer Kontaktfläche zwischen dem Zentrierfortsatz 8 und der Innenfläche 17 des Fortsatzes 7 gebildet ist. Die Länge 19 der Kontaktfläche wird im Folgenden der Einfachheit halber als Kontaktlänge 19 bezeichnet.

Im montierten Zustand kann ein Mittelpunkt des Fortsatzes zu einem Mittelpunkt des Zentrierfortsatzes einen Versatz aufweisen, so daß der radseitige Fortsatz 7 mit seiner Innenfläche 17 mit einem Außenumfang bzw. der Außenseite 9 des Zentrierfortsatzes 8 eine in radial Richtung gesehene Berührungslinie bildet. Dadurch wird in radial Richtung gesehen ein radialer Spalt zwischen der Innenfläche 17 des Fortsatzes 7 und dem Außenumfang bzw. der Außenseite 9 des Zentrierfortsatzes 8 gebildet, der sich von der Berührungslinie bis zu einem der Berührungslinie radial gegenüberliegenden Zenit stetig vergrößert, wobei der radiale Spalt im Zenit vorzugsweise einen Betrag von 0,03 bis 0,13 mm aufweisen kann. Hierbei kann ein Innendurchmesser der bevorzugten Durchbrechung bzw. Nabenbohrung 6 mit einem Nennmaß $X_R$ mm mit einer Toleranz von ± 0,03 mm aufweisen. Die Nabe 4 weist in bevorzugter Ausgestaltung an ihrem Zentrierfortsatz 8 einen Außendurchmesser von $X_N = X_R$ - 0,09 mm bei einer Toleranz von ± 0,02 mm auf. Die Nabenbohrung 6 weist in bevorzugter Ausgestaltung eine axiale Länge mit einem Betrag von $L_{34}$ auf. $L_{34}$ im Sinne der Erfindung ist die Summe der Länge des Überstandes 11, der Kontaktlänge 19 und des Kontaktabstandes 33.

Der Überstand 11 des Fortsatzes 7 über das freie Ende 12 des Zentrierfortsatzes 8 weist einen Betrag von mindestens 0,15 mm.

Die sich gegenüberliegenden Flächen (Innenfläche 17 des Fortsatzes 7/ Außenseite 9 des Zentrierfortsatzes 8) verlaufen bevorzugt parallel.

Somit weist die Verbindung des Kraftfahrzeugrades 1 an die Nabe 4 eine relativ kleine Kontaktlänge 19 auf.

Das Kraftfahrzeugrad 1 bzw. die Felgenschüssel 2 ist einstückig mit dem Fortsatz 7 hergestellt, wobei der Fortsatz 7 derart lang gestaltet ist, daß der Überstand 11 im montierten Zustand erreicht wird. Selbstverständlich kann der Fortsatz 7 aber auch als separates Bauteil bzw. als separater Flansch in geeigneter Weise mit der Felgenschüssel 2 verbunden werden, wobei der Fortsatz 7 in beiden Fällen von der Nabe 4 wegorientiert in Richtung zum freien Ende 12 des Zentrierfortsatzes 8 verläuft.

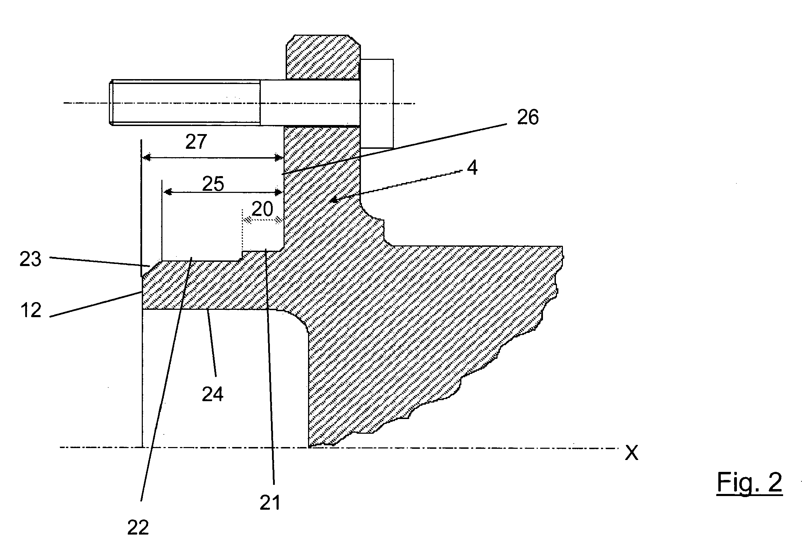

Die Nabe 4 weist an ihrem Zentrierfortsatz 8 eine stufige Ausgestaltung mit einer Bremsscheibenstufe 21 und einer Felgenstufe 22 auf (Figur 2). An seinem freien Ende 12 weist der Zentrierfortsatz 8 eine Fase 23 auf, die sich von seiner Außenseite 9 von der Felgenstufe 22 in radial Richtung gesehen bzw. bezogen auf die Mittelachse X schräg nach unten in Richtung zum freien Ende 12 orientiert und dort oberhalb einer zur Außenseite 9 gegenüberliegenden Innenseite 24 endet.

An der Bremsscheibenstufe 21 ist die Bremsscheibe 16 aufgenommen, die mit einer Anlagefläche 26 an der Nabe 4 anliegt. An der Felgenstufe 22 ist die Felgenschüssel 2 bzw. deren Fortsatz 7 aufgenommen (Figur 1).

Der Zentrierfortsatz 8 ist in axialer Richtung X gesehen mit einer Gesamtlänge 27 (Figur 2) hergestellt, die sich von der Anlagefläche 26 bis zum freien Ende 12 erstreckt. Günstiger Weise ist der Zentrierfortsatz 8 mit einer Längentoleranz von ±0,3 mm oder besser hergestellt, so daß sich eine Zentrierfortsatzlänge 25 mit der Toleranz ergibt. Die Bremsscheibenstufe 21 ist mit einer Länge 20 ausgeführt. Figur 1 zeigt, daß die Bremsscheibe 16 die Bremsscheibenstufe 27 in Richtung zum freien Ende 12 etwas überragt.

Die Bremsscheibe 16 ist zweckmäßig mit einer Dickentoleranz von ±0,15 mm oder besser hergestellt.

Der Figur 1 ist deutlich ein kreisabschnittsartiger Felgenabschnitt 28 der Felgenschüssel 2 zu entnehmen. Der kreisabschnittsartige Felgenabschnitt 28 ist direkt in einem Übergang der Felgenschüssel 2 in den Fortsatz 7 angeordnet. Der kreisabschnittsartige Felgenabschnitt 28 liegt mit einem Rückenabschnitt 29 an der Bremsscheibe 16 in radialer Richtung gesehen oberhalb des Zentrierfortsatzes 8 mit einem Berührpunkt 31 an. Natürlich liegt der Berührpunkt 31 vollumfänglich an der Bremsscheibe 16 an, und bildet eine Kreislinie. Der kreisabschnittsartige Felgenabschnitt 28 geht in radialer Richtung gesehen unterhalb des Berührpunkts 31 in den zylindrischen Fortsatz 7 über, so daß in diesem Übergang 32 die Kontaktlänge 19 beginnt. Der kreisabschnittsartige Felgenabschnitt 28 ist dabei derart hergestellt bzw. gebogen, daß ein Kontaktabstand 33 eine Toleranz von ±0,5 mm oder besser aufweist. Der Kontaktabstand 33 ist der axiale Abstand zwischen dem Berührpunkt 31 und dem Übergang 32 bzw. dem Beginn der Kontaktlänge 19.

Werden diese zuvor genannten Schlüsselparameter (Bremsscheibendicke, Zentrierfortsatzlänge, Kontaktabstand) mit ihren jeweiligen Toleranzen bei der Herstellung der einzelnen Komponenten eingehalten, ergibt sich in axialer Richtung vorteilhaft eine annehmbar kleine Kontaktlänge 19 von 0,5 bis 2,4 mm, vorzugsweise von 1 bis 2 mm. Die Kontaktlänge 19 erstreckt sich dabei von dem Übergang 32 bis zur Fase 23, wenn die Felgenschüssel 2 auf der Nabe 4 montiert ist.

Damit wird ein Rad-Nabe-Verbindung zur Verfügung gestellt, bei der das Kraftfahrzeugrad 1 ohne besonders großen Kraftaufwand von der Nabe 4 lösbar ist, da eine Korrosion der sich gegenüberliegenden Flächen (Innenfläche 17 des Fortsatzes 7/ Außenseite 9 des Zentrierfortsatzes 8) vermindert, wenn nicht sogar vermieden wird. Vorteilhaft kann somit u. A. auf eine mögliche Einfettung des Zentrierfortsatzes 8 bzw. deren Außenseite 9 verzichtet werden.

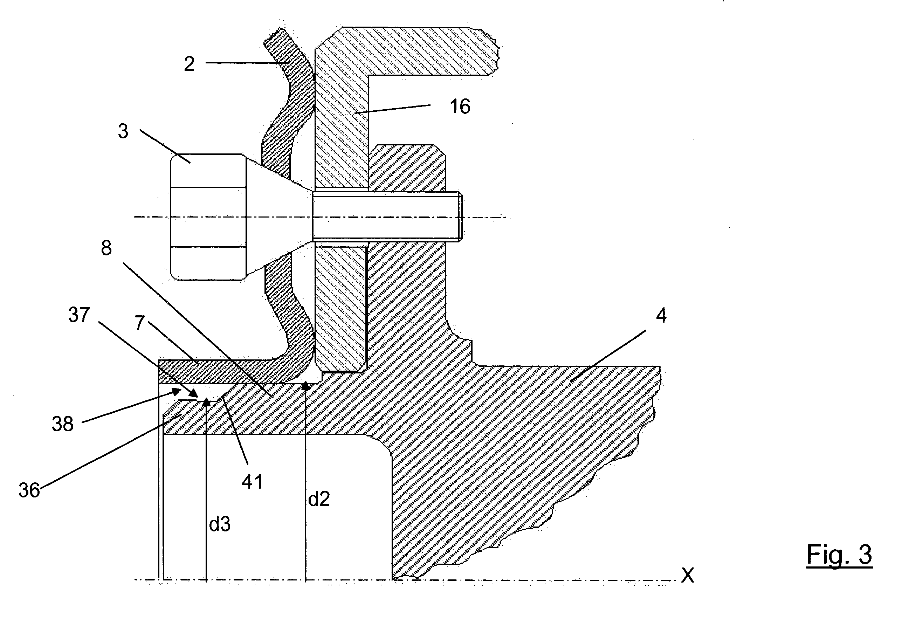

In Figur 3 ist ein weiteres Ausführungsbeispiel der erfindungsgemäßen Rad-Nabe-Verbindung dargestellt. Bei diesem Ausführungsbeispiel ist das Kraftfahrzeugrad 1 bzw. die Felgenschüssel 2 mittels als Radbolzen ausgestalteter Verbindungsmittel 3 mit der Nabe 4 verbunden.

Der Zentrierfortsatz 8 weist an seinem freien Endbereich 36 eine Abstufung 37 auf, so daß der Zentrierfortsatz 8 an seinem freien Endbereich 36 einen bezogen auf den Außendurchmesser d2 reduzierten Außendurchmesser d3 aufweist, wobei der Figur 3 der mögliche radiale Spalt 38 zu entnehmen ist. Der radiale Spalt 38 ist in dem Abschnitt des freien Endbereichs 36 vergrößert. Ein Übergang 39 der Außenseite 9 zur Abstufung 37 ist bevorzugt mittels einer geneigten Übergangsfläche 41 ausgestaltet. Die Übergangsfläche 41 kann selbstverständlich auch senkrecht zur Mittelachse X stehen. Der freie Endbereich 36 ist mit seiner Abstufung 37 ebenso wie die übrige Außenseite 9 rotationssymmetrisch, bevorzugt zylinderförmig ausgeführt. Natürlich kann die Abstufung 37 auch bei dem Ausführungsbeispiel nach Figur 1 vorgesehen sein. Selbstverständlich kann auf eine solche Abstufung an dem Zentrierfortsatz verzichtet werden.

Der abgestuft verlängerte Zentrierfortsatz 8 dient zur Montagehilfe bei einer Verbindung mittels Radbolzen, da in diesem Fall das Rad für die Montage nicht auf die Stehbolzen aufgesetzt werden kann, bevor es mit seinem Fortsatz 7 über den Zentrierfortsatz 8 der Nabe 4 geschoben wird.

Grundsätzlich liegt der Erfindung die folgende überraschende Beziehung zugrunde:

$$L_{25} + T_{25} = L_{34} - T_{34} + D_{16} - T_{16} - L_{11}$$

und

$$L_{25} - T_{25} = D_{16} + T_{16} + L_{33} + T_{33} + L_{19} \, ,$$

beispielsweise

$$L_{25} + 0{,}3\,mm = L_{34} - 1{,}5\,mm + D_{16} - 0{,}15\,mm - L_{11}$$

und

$$L_{25} - 0{,}3\,mm = D_{16} + 0{,}15\,mm + L_{33} + 0{,}5\,mm + L_{19}$$

wobei

$L_{25}$ der Zentrierfortsatzlänge 25 in Figur 2 entspricht,
$L_{34}$ der Summe der Längen des Überstandes 11, der Kontaktlänge 19 und des Kontaktabstandes 33 in Figur 1 entspricht (die auch als Raddurchzugslänge bezeichnet werden kann),
$L_{11}$ dem minimalen Überstand 11 entspricht,
$L_{19}$ der minimalen Kontaktlänge 19 entspricht,
$D_{16}$ der Bremsscheibendicke entspricht
$L_{33}$ dem Kontaktabstand 33 in Figur 1 entspricht und

$T_{16}$, $T_{25}$, $T_{33}$ und $T_{34}$ den Toleranzen der $D_{16}$, $L_{25}$, $L_{33}$ und $L_{34}$ entsprechen.

Es können immer zwei der vier Größen frei gewählt werden, die anderen beiden Größen ergeben sich dann nach den oben stehenden Gleichungen.

**Patentansprüche**

1. Rad-Nabe-Verbindung mit einer Nabe (4), die einen Zentrierfortsatz (8) aufweist,
   **dadurch gekennzeichnet, daß**
   der Zentrierfortsatz (8)
   eine minimale Zentrierfortsatzlänge $L_{25}$ in axialer Richtung gemäß

$$L_{25,\,min} = L_{25} - T_{25} = (D_{16} + T_{16}) + (L_{33} + T_{33}) + L_{19,\,min}$$
$$= D_{16,\,max} + L_{33,\,max} + L_{19,\,min} \tag{1}$$

   und
   eine maximale Zentrierfortsatzlänge $L_{25}$ in axialer Richtung gemäß

$$L_{25,\,max} = L_{25} + T_{25} = (L_{34} - T_{34}) + (D_{16} - T_{16}) - L_{11} = L_{34,\,min} + D_{16,\,min} - L_{11} \tag{2}$$

   aufweist, wobei T
   der Term $L_{25}$ der Zentrierfortsatzlänge (25) entspricht, wobei die Toleranz $T_{25}$ einen Betrag von 0,3mm oder besser aufweist und, dass
   der Term $L_{34}$ der Summe der Längen eines Überstandes 11, einer Kontaktlänge 19 und eines Kontaktabstandes 33 entspricht, wobei die Toleranz $T_{34}$ einen Betrag von 1,5 mm aufweist und, dass
   der Term $L_{11}$ einem minimalen Überstand 11 entspricht,
   der Term $L_{19}$ einer minimalen Kontaktlänge 19 entspricht,
   der Term $D_{16}$ einer Bremsscheibendicke entspricht, wobei die Toleranz $T_{16}$ einen Betrag von 0,15mm oder besser aufweist und, dass
   der Term $L_{33}$ dem Kontaktabstand 33 entspricht, wobei die Toleranz $T_{33}$ einen Betrag von 0,5mm oder besser aufweist.

2. Rad-Nabe-Verbindung nach Anspruch 1,
   **dadurch gekennzeichnet, daß**
   eine Länge (19) der Kontaktfläche in axialer Richtung gesehen einen Betragsbereich von 0,5 bis 2,4 mm aufweist.

3. Rad-Nabe-Verbindung nach Anspruch 1 oder 2,
   **dadurch gekennzeichnet, daß**
   der Zentrierfortsatz (8) stufenförmig mit einer Bremsscheibenstufe (21) und einer Felgenstufe (22) ausgeführt, wobei die Felgenstufe (22) in radial Richtung gesehen tiefer angeordnet ist als die Bremsscheibenstufe (21).

4. Rad-Nabe-Verbindung nach einem der vorhergehenden Ansprüche,
   **dadurch gekennzeichnet, daß**
   der Zentrierfortsatz (8) eine Fase (23) aufweist, die sich von einer Außenseite (9) bezogen auf eine Mittelachse (X) in radialer Richtung gesehen schräg nach unten zu einem freien Ende (12) des Zentrierfortsatzes (8) erstreckt.

5. Rad-Nabe-Verbindung nach einem der vorhergehenden Ansprüche,
   **dadurch gekennzeichnet, daß**
   eine Felgenschüssel (2) einen kreisabschnittsartigen Felgenabschnitt (28) aufweist, der mit seinem Rückenbereich (29) an einer Bremsscheibe (16) anliegt, so daß der Anlagebereich (31) gebildet ist.

**6.** Rad-Nabe-Verbindung nach einem der vorhergehenden Ansprüche,
**dadurch gekennzeichnet, daß**
ein Fortsatz (7) mit seiner Innenfläche (17) einseitig am Zentrierfortsatz (8) bzw. dessen Außenseite (9) anliegt, so daß auf der radial gegenüberliegenden Seite ein radialer Spalt (38) gebildet ist, der in seinem Zenit einen Betrag von 0,03 bis 0,13 mm aufweist.

**7.** Rad-Nabe-Verbindung nach einem der vorhergehenden Ansprüche,
**dadurch gekennzeichnet, daß**
ein Fortsatz (7) mit seinem freien Ende in axialer Richtung gesehen ein freies Ende (12) des Zentrierfortsatzes (8) etwas überragt, so daß ein Überstand (11) gebildet ist, wobei der Überstand (11) einen Betrag von zumindest 0,15 mm aufweist.

**8.** Rad-Nabe-Verbindung nach einem der vorhergehenden Ansprüche,
**dadurch gekennzeichnet, daß**
der Zentrierfortsatz (8) an seinem freien Ende (12) stufenförmig ausgeführt ist.

**9.** Verfahren zur Herstellung einer Rad-Nabe-Verbindung (5) mit einer Nabe (4), die einen Zentrierfortsatz (8) aufweist, nach einem der vorhergehenden Ansprüche,
**dadurch gekennzeichnet, daß**
eine minimale Zentrierfortsatzlänge $L_{25,\,min}$ in axialer Richtung bestimmt wird gemäß

$$L_{25,\,min} = L_{25} - T_{25} = (D_{16} + T_{16}) + (L_{33} + T_{33}) + L_{19,\,min}$$
$$= D_{16,\,max} + L_{33,\,max} + L_{19,\,min} \tag{1}$$

und eine maximale Zentrierfortsatzlänge $L_{25,\,max}$ in axialer Richtung bestimmt wird gemäß

$$L_{25,\,max} = L_{25} + T_{25} = (L_{34} - T_{34}) + (D_{16} - T_{16}) - L_{11} = L_{34,\,min} + D_{16,\,min} - L_{11} \tag{2}$$

**Claims**

**1.** Wheel-hub connection having a hub (4) which has a centring projection (8),
**characterized in that**
the centring projection (8)
has a minimum centring projection length $L_{25}$ in an axial direction conforming to the following equation:

$$L_{25,\,min} = L_{25} - T_{25} = (D_{16} + T_{16}) + (L_{33} + T_{33}) + L_{19,\,min}$$
$$= D_{16,\,max} + L_{33,\,max} + L_{19,\,min} \tag{1}$$

and
a maximum centring projection length $L_{25}$ in the axial direction conforming to the following equation:

$$L_{25,\,max} = L_{25} + T_{25} = (L_{34} - T_{34}) + (D_{16} - T_{16}) - L_{11} = L_{34,\,min}$$
$$+ D_{16,\,min} - L_{11} \tag{2}$$

wherein

the term $L_{25}$ corresponds to the centring projection length (25), wherein the tolerance $T_{25}$ has a magnitude of 0.3 mm or better, and **in that**

the term $L_{34}$ corresponds to the sum of the lengths of a projecting length 11, of a contact length 19 and of a contact spacing 33, wherein the tolerance $T_{34}$ has a magnitude of 1.5 mm, and **in that**

the term $L_{11}$ corresponds to a minimum projecting length 11,

the term $L_{19}$ corresponds to a minimum contact length 19,

the term $D_{16}$ corresponds to a brake disc thickness, wherein the tolerance $T_{16}$ has a magnitude of 0.15 mm or better, and **in that**

the term $L_{33}$ corresponds to the contact spacing 33, wherein the tolerance $T_{33}$ has a magnitude of 0.5 mm or better.

2. Wheel-hub connection according to Claim 1,
**characterized in that**
a length (19) of the contact area as viewed in the axial direction has a range of magnitude of 0.5 to 2.4 mm.

3. Wheel-hub connection according to Claim 1 or 2,
**characterized in that**
the centring projection (8) is of stepped design with a brake disc step (21) and a rim step (22), with the rim step (22) being arranged lower than the brake disc step (21) as viewed in the radial direction.

4. Wheel-hub connection according to one of the preceding claims,
**characterized in that**
the centring projection (8) has a bevel (23) which, from an outer side (9) in relation to a central axis (X) as viewed in the radial direction, extends obliquely downward to a free end (12) of the centring projection (8).

5. Wheel-hub connection according to one of the preceding claims,
**characterized in that**
a rim bowl (2) has a rim portion (28) which is in the shape of a section of a circle and which bears with its rear region (29) against the brake disc (16) so as to form the area of abutment (31).

6. Wheel-hub connection according to one of the preceding claims,
**characterized in that**
a projection (7) bears with its inner surface (17) at one side against the centring projection (8) or the outer side (9) thereof, such that on the radially opposite side, a radial gap (38) is formed which, at its zenith, has a magnitude of 0.03 to 0.13 mm.

7. Wheel-hub connection according to one of the preceding claims,
**characterized in that**
a projection (7) projects with its free end as viewed in the axial direction a short distance beyond a free end (12) of the centring projection (8) so as to form a projecting length (11), with the projecting length (11) having a magnitude of at least 0.15 mm.

8. Wheel-hub connection according to one of the preceding claims,
**characterized in that**
the centring projection (8) is of stepped design at its free end (12).

9. Method for producing a wheel-hub connection (5), having a hub (4) which has a centring projection (8), according to one of the preceding claims,
**characterized in that**
a minimum centring projection length $L_{25,min}$ in an axial direction is determined by way of the following equation:

$$L_{25,\,min} = L_{25} - T_{25} = (D_{16} + T_{16}) + (L_{33} + T_{33}) + L_{19,\,min}$$
$$= D_{16,\,max} + L_{33,\,max} + L_{19,\,min} \qquad (1)$$

and a maximum centring projection length $L_{25,max}$ in the axial direction is determined by way of the following equation:

$$L_{25,max} = L_{25} + T_{25} = (L_{34} - T_{34}) + (D_{16} - T_{16}) - L_{11} = L_{34, min} + D_{16, min} - L_{11} \qquad (2)$$

**Revendications**

1. Liaison roue-moyeu comprenant un moyeu (4), qui présente une saillie de centrage (8),
   **caractérisée en ce que**
   la saillie de centrage (8) présente une longueur de saillie de centrage $L_{25}$ minimale dans la direction axiale correspondant à :

$$L_{25, min} = L_{25} - T_{25} = (D_{16} + T_{16}) + (L_{33} + T_{33}) + L_{19, min} = D_{16, max} + L_{33, max} + L_{19, min} \qquad (1)$$

   et
   une longueur de saillie de centrage $L_{25}$ maximale dans la direction axiale correspondant à :

$$L_{25, max} = L_{25} + T_{25} = (L_{34} - T_{34}) + (D_{16} - T_{16}) - L_{11} = L_{34, min} + D_{16, min} - L_{11} \qquad (2)$$

   le terme $L_{25}$ correspondant à la longueur de saillie de centrage (25), la tolérance $T_{25}$ présentant une valeur de 0,3 mm ou mieux, et **en ce que**
   le terme $L_{34}$ correspond à la somme des longueurs d'un dépassement 11, d'une longueur de contact 19 et d'une distance de contact 33, la tolérance $T_{34}$ présentant une valeur de 1,5 mm, et **en ce que**
   le terme $L_{11}$ correspond à un dépassement 11 minimal,
   le terme $L_{19}$ correspond à une longueur de contact 19 minimale,
   le terme $D_{16}$ correspond à une épaisseur du disque de frein, la tolérance $T_{16}$ présentant une valeur de 0,15 mm ou mieux, et **en ce que**
   le terme $L_{33}$ correspond à la distance de contact 33, la tolérance $T_{33}$ présentant une valeur de 0,5 mm ou mieux.

2. Liaison roue-moyeu selon la revendication 1,
   **caractérisée en ce**
   **qu'**une longueur (19) de la surface de contact, vue dans la direction axiale, présente une plage de valeurs de 0,5 à 2,4 mm.

3. Liaison roue-moyeu selon la revendication 1 ou 2,
   **caractérisée en ce que**
   la saillie de centrage (8) est réalisée sous forme étagée avec un étage de disque de frein (21) et un étage de jante (22), l'étage de jante (22), vu dans la direction radiale, étant disposé plus profondément que l'étage de disque de frein (21).

4. Liaison roue-moyeu selon l'une quelconque des revendications précédentes,
   **caractérisée en ce que**
   la saillie de centrage (8) présente un biseau (23) qui s'étend depuis un côté extérieur (9) par rapport à un axe médian (X), vu dans la direction radiale, obliquement vers le bas jusqu'à une extrémité libre (12) de la saillie de centrage (8).

5. Liaison roue-moyeu selon l'une quelconque des revendications précédentes,
   **caractérisée en ce**
   **qu'**un disque de jante (2) présente une portion de jante (28) en forme de portion de cercle, qui s'applique avec sa région arrière (29) contre le disque de frein (16), de manière à former la région d'appui (31).

**6.** Liaison roue-moyeu selon l'une quelconque des revendications précédentes,
**caractérisée en ce**
**qu**'une saillie (7) s'applique avec sa surface interne (17) d'un côté contre la saillie de centrage (8) ou son côté extérieur (9), de sorte qu'une fente radiale (38) soit formée du côté radialement opposé, laquelle présente à son zénith une valeur de 0,03 à 0,13 mm.

**7.** Liaison roue-moyeu selon l'une quelconque des revendications précédentes,
**caractérisée en ce**
**qu**'une saillie (7) avec son extrémité libre, vue dans la direction axiale, dépasse quelque peu par rapport à une extrémité libre (12) de la saillie de centrage (8), de sorte qu'un dépassement (11) soit formé, le dépassement (11) présentant une valeur d'au moins 0,15 mm.

**8.** Liaison roue-moyeu selon l'une quelconque des revendications précédentes,
**caractérisée en ce que**
la saillie de centrage (8) est réalisée sur son extrémité libre (12) sous forme étagée.

**9.** Procédé de fabrication d'une liaison roue-moyeu (5) comprenant un moyeu (4) qui présente une saillie de centrage (8) selon l'une quelconque des revendications précédentes,
**caractérisé en ce**
**qu**'une longueur de saillie de centrage minimale $L_{25,\,min}$ dans la direction axiale est déterminée selon

$$L_{25,\,min} = L_{25} - T_{25} \quad = (D_{16} + T_{16}) + (L_{33} + T_{33}) + L_{19,\,min}$$
$$= D_{16,\,max} + L_{33,\,max} + L_{19,\,min} \quad (1)$$

et une longueur de saillie de centrage maximale $L_{25,\,max}$ dans la direction axiale est déterminée selon

$$L_{25,\,max} = L_{25} + T_{25} = (L_{34} - T_{34}) + (D_{16} - T_{16}) - L_{11} =$$
$$L_{34,\,min} + D_{16,\,min} - L_{11} \quad (2)$$

Fig. 1

Fig. 2

EP 2 123 478 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5938292 A